# EUROPÄISCHE PATENTSCHRIFT

(11) **EP 3 369 592 B1**
(45) Veröffentlichungstag und Bekanntmachung des Hinweises auf die Patenterteilung: **07.10.2020**
(21) Anmeldenummer: 18157928.5
(22) Anmeldetag: 21.02.2018
(51) Int. Cl.: B60G 17/027, B60G 17/033, B62D 7/18, B60B 27/00, B60G 21/073, B60G 3/26

(54) **FAHRZEUG MIT ANTIROLLEINRICHTUNG ZUR CHASSISSTABILISIERUNG**
VEHICLE WITH ANTIROLL DEVICE FOR CHASSIS STABILIZATION
VÉHICULE DOTÉ DU DISPOSITIF ANTI-ROULIS DESTINÉ À LA STABILISATION DU CHÂSSIS

(30) Priorität: 01.03.2017 DE 102017104309
(43) Veröffentlichungstag der Anmeldung: 05.09.2018
(73) Patentinhaber: Weiss, Wolfgang, 85521 Ottobrunn (DE)
(72) Erfinder: Weiss, Wolfgang, 85521 Ottobrunn (DE)
(74) Vertreter: Schlimme, Wolfram

(56) Entgegenhaltungen:
- DE-A1- 19 637 159
- DE-A1-102011 078 262
- DE-B3-102015 014 839

## Beschreibung

### TECHNISCHES GEBIET

Die vorliegende Erfindung betrifft ein Fahrzeug gemäß dem Oberbegriff des Patentanspruchs 1, das mit einer Antirolleinrichtung zur Chassisstabilisierung bei Kurvenfahrt ausgestattet ist. Insbesondere, aber nicht ausschließlich, betrifft die Erfindung ein Rennfahrzeug mit geringem Abstand vom Schwerpunkt der ungefederten Massen zur Rollachse.

### HINTERGRUND DER ERFINDUNG

Aufbauten von Fahrzeugen, zum Beispiel Chassis, neigen sich bei Kurvenfahrt um die Rollachse des Fahrzeugs, also um eine Achse, die durch das Rollzentrum der Vorderachse und durch das Rollzentrum der Hinterachse verläuft. Eine solche Kurvenneigung (Rollen) ist aus fahrzeugdynamischen Gründen zum Großteil unerwünscht. Zur Abhilfe gegen das Rollen werden üblicherweise mechanische Einrichtungen (härtere Federn, Stabilisatoren) eingesetzt, welche, je nach Auslegung, eine mehr oder weniger große Rollsteifigkeit des Chassis bewirken. Eine unerwünschte Nebenwirkung bei einer auf diese Weise erzielten Rollsteifigkeit ist eine erhöhte dynamische Radlastverteilung Richtung Kurvenaußenrad, welche wieder das Eigenlenkverhalten der betroffenen Achse beeinflusst. Zusätzlich wird durch das Rollen, insbesondere bei Rennfahrzeugen, die Aerodynamik des Fahrzeugs ungünstig beeinflusst und dadurch die mögliche Kurvengeschwindigkeit des Fahrzeugs herabgesetzt.

### STAND DER TECHNIK

Aus der DE 196 37 159 A1 ist eine Radaufhängung mit selbsttätiger Sturzanpassung bekannt, bei der zwischen Fahrzeugrahmen und den oszillierenden bzw. schwingenden Radträgern bzw. Aufhängungsteilen hydraulische Geberzylinder angeordnet sind, deren Arbeitsräume kreuzweise miteinander verbunden sind, welche Nehmerzylinder an den oberen Querlenkern ansteuern und damit eine Kompensation der Sturzänderung in Abhängigkeit von der Rollbewegung des Fahrzeugrahmens vollziehen. Dabei ändert sich jedoch der Radsturz und damit die Fahrwerksgeometrie, was nach einschlägigen motorsportlichen Regularien nicht erlaubt ist.

### DARSTELLUNG DER ERFINDUNG

Aufgabe der vorliegenden Erfindung ist es daher, ein gattungsgemäßes Fahrzeug anzugeben, das eine passive Kompensation der Rollneigung des Chassis' bei Kurvenfahrt ermöglicht, ohne dass dabei eine Radsturzveränderung erfolgt.

Diese Aufgabe wird gelöst durch das Fahrzeug mit den Merkmalen des Patentanspruchs 1.

Ein Fahrzeug mit einem Chassis, an dem zwei eine vordere Radpaarung bildende Vorderräder und zwei eine hintere Radpaarung bildende Hinterräder mittels einer jeweiligen Radaufhängung angeordnet sind, wobei jedem Rad ein Radträger zugeordnet ist, an dem das zugeordnete Rad um eine jeweilige Drehachse drehbar gelagert ist und der über Lenker mit dem Chassis verbunden ist, und wobei eine Antirolleinrichtung vorgesehen ist, die bei Kurvenfahrt einer Neigung des Chassis' um die Rollachse des Fahrzeugs entgegenwirkt, beispielsweise sie reduziert oder eliminiert, zeichnet sich erfindungsgemäß dadurch aus, dass die Räder zumindest einer der Radpaarungen relativ zum zugeordneten Radträger in Axialrichtung der zugeordneten Drehachse verschiebbar gelagert sind; dass die Antirolleinrichtung Wegaufnehmer aufweist, wobei jedem der Räder der zumindest einen Radpaarung zumindest einer der Wegaufnehmer derart zugeordnet ist, dass eine axiale Verschiebung eines Rades in dem zumindest einen zugeordneten Wegaufnehmer ein Signal erzeugt; dass die Antirolleinrichtung weiterhin Stellglieder aufweist, wobei jedem der Räder der zumindest einen Radpaarung zumindest ein Stellglied zugeordnet ist, das einerseits mit dem Chassis mechanisch verbunden ist und das andererseits über Lenker mit dem zugeordneten Radträger mechanisch verbunden ist, und dass die Antirolleinrichtung eine Signalverarbeitungseinrichtung mit Signalleitungen aufweist, die die Wegaufnehmer mit den Stellgliedern zur Übertragung der Signale derart verbinden, dass eine axiale Verschiebung zumindest eines Rades zumindest ein Stellglied derart beeinflusst, dass das zumindest eine Stellglied das Chassis mit einem Stabilisierungsmoment um die Rollachse beaufschlagt, das dem durch die Kurvenfahrt bedingten und die Neigung des Chassis' verursachenden Rollmoment entgegenwirkt.

### VORTEILE

Diese erfindungsgemäße Fahrwerkskinematik mit den zugehörigen Radaufhängungen einer Radpaarung, die beim Rollen des Chassis gegenläufig oszillieren, ermöglicht es, bei Querbeschleunigungen, die bei einer Kurvenfahrt auftreten, ein Stabilisierungsmoment für das Fahrzeugchassis um die Rollachse des Fahrzeugs zu erzeugen, das dem fliehkraftbedingten Rollmoment des Fahrzeugchassis' entgegenwirkt, ohne dass sich dabei die Fahrwerksgeometrie, zum Beispiel die Länge und Lage der Querlenker oder die Spreizung der Radachse und damit der Radsturz, ändert und ohne die Begleiterscheinung einer zu sehr erhöhten Radlast an den kurvenäußeren Rädern. Diese Erzeugung des Stabilisierungsmoments erfolgt auf rein passive Weise.

Weitere bevorzugte und vorteilhafte Ausgestaltungsmerkmale des erfindungsgemäßen Fahrzeugs sind Gegenstand der Unteransprüche 2 bis 10.

Vorzugsweise sind die Wegaufnehmer als Drucksensoren ausgebildet. Dadurch kann das vom Wegaufnehmer gelieferte Signal beispielsweise als Drucksignal schnell und nahezu verlustfrei zu den Stellgliedern übertragen werden.

Vorteilhaft ist dabei, wenn der jeweilige Drucksensor zumindest eine hydraulische oder pneumatische Kolben-Zylinder-Einheit aufweist.

In einer besonders bevorzugten Ausführungsform der Erfindung, die mit anderen Ausführungsformen kombinierbar ist, ist das jeweilige Stellglied in einen Stoßdämpfer integriert. Dies ermöglicht eine platz- und gewichtsparende Realisierung der Erfindung. Es ist allerdings im Rahmen der Erfindung auch möglich, die Stellglieder als eigenständige Elemente vorzusehen.

In einer vorteilhaften Weiterbildung der Erfindung ist das jeweilige Stellglied von zumindest einer hydraulischen oder pneumatischen Kolben-Zylinder-Einheit gebildet.

Von Vorteil ist es weiterhin, wenn die Wegaufnehmer einer Radpaarung über zugeordnete Signalleitungen mit allen Stellgliedern dieser Radpaarung zur Signalübertragung wirksam verbunden sind. Dabei ist zu einer vorzugsweisen Lösung der Aufgabe der Erfindung beispielsweise vorgesehen, dass die Arbeitsräume der vom jeweiligen Rad einer Radpaarung beaufschlagten Wegaufnehmer, zum Beispiel die Arbeitsräume des einem linken Rad zugeordneten hydraulischen oder pneumatischen Drucksensors und die Arbeitsräume des einem rechten Rad zugeordneten hydraulischen oder pneumatischen Drucksensors, kreuzweise druckwirksam miteinander verbunden sind, und dass Arbeitsräume der zugeordneten Stellglieder, zum Beispiel die Arbeitsräume eines linken hydraulischen oder pneumatischen Aktuators und die Arbeitsräume eines rechten hydraulischen oder pneumatischen Aktuators einer Radpaarung ebenfalls kreuzweise druckwirksam miteinander verbunden sind, wobei die Drucksensoren die Aktuatoren hydraulisch oder pneumatisch ansteuern.

Vorteilhaft ist auch eine Ausführungsform, bei der der zumindest eine Wegaufnehmer eines Rades einer Radpaarung über zugeordnete Signalleitungen (zum Beispiel hydraulische oder pneumatische Druckleitungen) mit einem Zwischenaktuator zur Signalübertragung wirksam verbunden ist und das die Zwischenaktuatoren einer Radpaarung mit den Stellgliedern dieser Radpaarung zur Signalübertragung wirksam verbunden sind. Dadurch werden die Signalleitungswege der beiden Seiten voneinander entkoppelt.

Dabei sind die Zwischenaktuatoren vorzugsweise über eine Hebelmechanik miteinander gekoppelt. Diese mechanische Kopplung bewirkt bei einer hydraulischen oder pneumatischen Ausführung der Antirolleinrichtung eine Medienentkopplung, wodurch sich eine Störung in einem Hydraulik- oder Pneumatikkreis auf der einen Fahrzeugseite nicht auf den Hydraulik- oder Pneumatikkreis der anderen Fahrzeugseite auswirkt.

Von besonderem Vorteil ist es dabei, wenn die Hebelmechanik derart verstellbar ausgebildet ist, dass das von den Zwischenaktuatoren aufgenommene Signal (beispielsweise der auf die Zwischenaktuatoren wirkende Überdruck) verstärkt oder reduziert an die Stellglieder weiterübertragen wird. Auf diese Weise kann die Größe des erzeugten Stabilisierungsmoments beeinflusst und verstellt werden.

Vorteilhaft ist es auch, wenn die Hebelmechanik eine Kolben-Zylinder-Einheit aufweist, deren Kammern mit Kammern von Kolben-Zylinder-Einheiten der Stellglieder zur Druckübertragung wirksam verbunden sind. Dadurch wird von der Hebelmechanik ein Drucksignal erzeugt, das an in dem jeweiligen Stellglied vorgesehene hydraulische oder pneumatische Aktuatoren geleitet wird.

Auch von Vorteil ist es, wenn die Wegaufnehmer einer ersten Radpaarung (zum Beispiel der Vorderräder) über zugeordnete Signalleitungen mit Stellgliedern einer zweiten Radpaarung (zum Beispiel der Hinterräder) zur Signalübertragung wirksam verbunden sind, um Bewegungen des Fahrzeugs um die Nickachse entgegenzuwirken, zum Beispiel zu reduzieren oder eliminieren und/oder um den Roll-Nick-Bewegungen des Fahrzeugs entgegenzuwirken, zum Beispiel diese zu reduzieren oder zu eliminieren.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine Draufsicht auf ein erfindungsgemäß ausgebildetes Fahrzeug;
- Fig. 2: eine schematische Heckansicht des Fahrzeugs aus Fig. 1 mit einer ersten Variante der erfindungsgemäß vorgesehenen Antirolleinrichtung;
- Fig. 2A: einen vergrößerten Ausschnitt aus Fig. 2;
- Fig. 3: die schematische Heckansicht aus Fig. 2 mit durch Pfeile dargestellten Kraftwirkrichtungen ;
- Fig. 4: eine schematische Heckansicht des Fahrzeugs aus Fig. 1 mit einer zweiten Variante der erfindungsgemäß vorgesehenen Antirolleinrichtung und
- Fig. 4A: einen vergrößerten Ausschnitt aus Fig. 4;
- Fig. 5: die schematische Heckansicht aus Fig. 4 mit durch Pfeile dargestellten Kraftwirkrichtungen.

### DARSTELLUNG VON BEVORZUGTEN AUSFÜHRUNGSBEISPIELEN

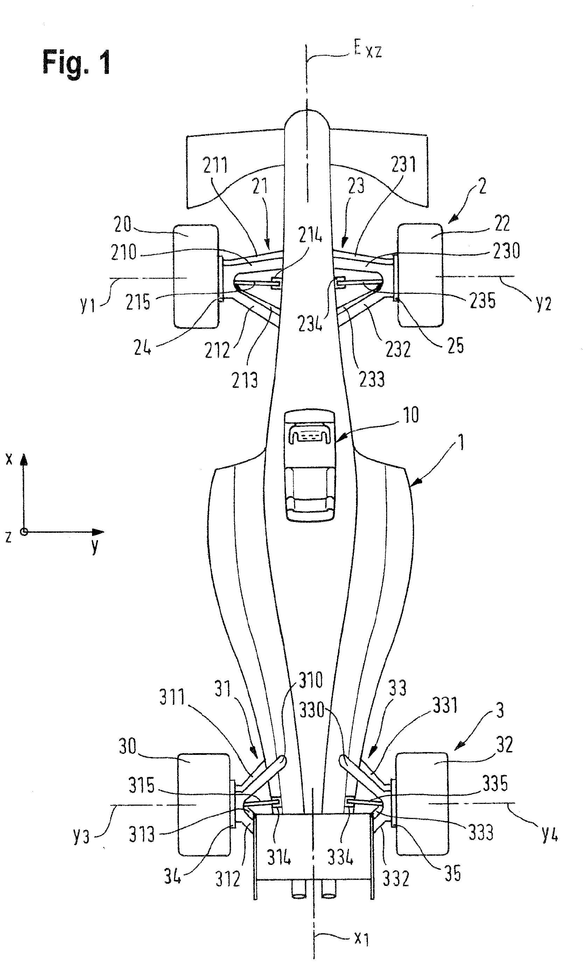

Fig. 1 zeigt die Draufsicht auf ein Formel-Rennfahrzeug, das auf erfindungsgemäße Weise ausgebildet ist. Dieses Fahrzeug weist ein Chassis 1 auf, an dem zwei Vorderräder 20, 22 einer vorderen Radpaarung 2 sowie zwei Hinterräder 30, 32 einer hinteren Radpaarung 3 in einer dem Fachmann an sich bekannten Weise angelenkt sind. Das Chassis 1 nimmt einen (nicht dargestellten) Antrieb, ein Cockpit 10 sowie (nicht gezeigte) Kraftstoffbehälter und weitere für den Betrieb des Fahrzeugs erforderliche Komponenten auf.

Das Chassis trägt eine aerodynamisch gestaltete Karosserie und zudem sind am Chassis aerodynamische Hilfsmittel angebracht, wie sie aus dem Automobilrennsport allgemein bekannt sind. Zwar ist in Fig. 1 beispielhaft ein Monoposto-Rennfahrzeug mit nicht von einer Karosserie abgedeckten Rädern 20, 22, 30, 32 gezeigt, doch kann die Erfindung auch in anderen Rennfahrzeugen, beispielsweise solchen mit einer die Räder abdeckenden Karosserie, oder auch in Straßenfahrzeugen realisiert sein.

Die Räder 20, 22, 30, 32 sind jeweils mit einer Radaufhängung 21, 23, 31, 33 am Chassis 1 schwenkbar angelenkt, wobei jedes Rad 20, 22, 30, 32 einen Radträger 24, 25, 34, 35 aufweist, an welchem das vom Chassis 1 abgewandte Ende der jeweiligen Radaufhängung 21, 23, 31, 33 ebenfalls schwenkbar angelenkt ist.

Zwischen dem Chassis 1 und dem jeweiligen Radträger 24, 25, 34, 35 sind jeweils Querlenker vorgesehen, wobei der Aufbau einer Radaufhängung nachstehend anhand der vorderen linken Radaufhängung 21 im Detail beschrieben wird. Obere Lenker 210, 212 bilden einen V-förmigen Querlenker, wobei die beiden Lenker 210, 212 radträgerseitig miteinander verbunden sind und dort in einem oberen Lager am Radträger 24 um eine obere Lenkerschwenkachse gelenkig gelagert sind. Das jeweilige chassisseitige Ende der Lenker 210, 212 des oberen Querlenkers ist im oberen Bereich des Chassis 1 Achse schwenkbar gelagert.

Ein vorderer unterer Lenker 211 bildet zusammen mit einem hinteren unteren Lenker 213 einen unteren V-förmig ausgestalteten Querlenker, wobei die beiden unteren Lenker 211, 213 radträgerseitig miteinander verbunden sind und dort in einem unteren Lager am Radträger 24 um eine untere Lenkerschwenkachse gelenkig gelagert sind. Die beiden vom Radträger 24 abgewandten freien Enden der unteren Lenker 211, 213 sind im unteren Bereich des Chassis 1 an diesem ebenfalls so angelenkt, dass sie um eine jeweilige Achse schwenkbar sind.

In der gleichen Weise sind auch die vordere rechte Radaufhängung 23, die hintere linke Radaufhängung 31 und die hintere rechte Radaufhängung 33 ausgebildet und mit jeweils obere Querlenker bildenden Lenkern 230, 232, 310, 312, 330, 332 sowie jeweils untere Querlenker bildenden Lenkern 231, 233, 311, 312, 331, 333 ausgestattet.

Im unteren Bereich eines jeweiligen Radträgers 24, 25, 34, 35 ist eine Schubstange 215, 235, 315, 335 schwenkbar gelagert. Diese ebenfalls einen Lenker bildende Schubstange 215, 235, 315, 335 ist chassisseitig an einem zur Fahrzeugaußenseite weisenden äußeren Hebelarm eines zugeordneten, am Chassis 1 schwenkbar gelagerten Umlenkhebels 214, 234, 314, 334 um eine im Wesentlichen parallel zur Fahrzeuglängsachse verlaufende Schwenkachse gelagert.

Auf dem jeweiligen Radträger 24, 25, 34, 35 ist das zugeordnete Rad um eine jeweilige Radachse y₁, y₂, y₃, y₄ drehbar und axialverschiebbar gelagert, wie weiter unten noch näher ausgeführt wird. Damit diese Axialverschiebbarkeit nicht zu einem "schwammigen" Fahrverhalten führt, sind (nicht gezeigte) Vorspann- und Dämpfungsmittel vorgesehen, die das jeweilige Rad 20, 22, 30, 32 relativ zum zugeordneten Radträger 24, 25, 34, 35 in einer definierten Achslage halten, aus der das jeweilige Rad 20, 22, 30, 32 nur durch Querkräfte in Axialrichtung verschiebbar ist.

Die Radaufhängung der Vorderräder 20, 22 weist zudem in üblicher Weise Lenkungsstreben auf, mittels derer die Vorderräder lenkbar sind und die Radaufhängung der Hinterräder 30, 32 weist Radführungsstreben auf die jeweils zur Wahrung der Übersichtlichkeit in Fig. 1 nicht dargestellt sind. Auch zu den Hinterrädern verlaufende Antriebswellen sind zur Wahrung der Übersichtlichkeit in den Figuren nicht dargestellt.

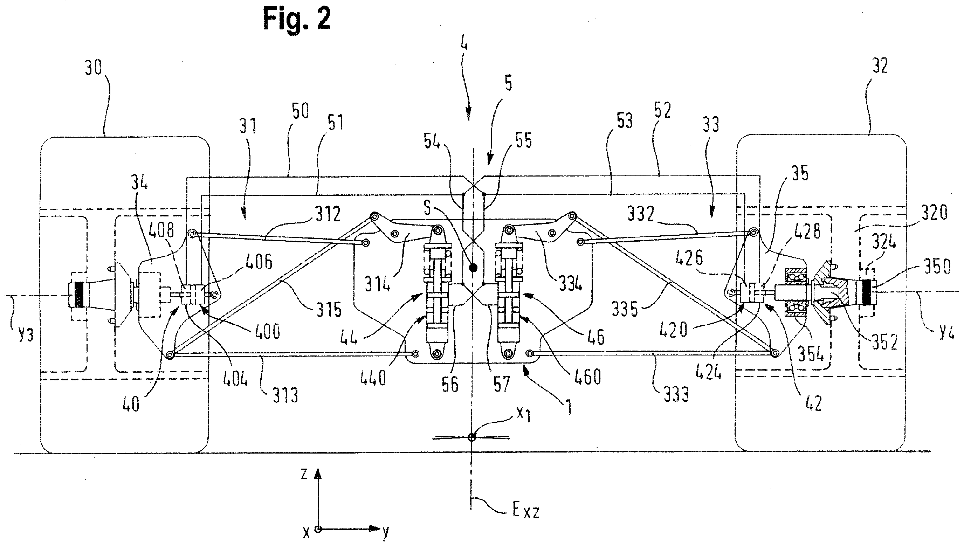

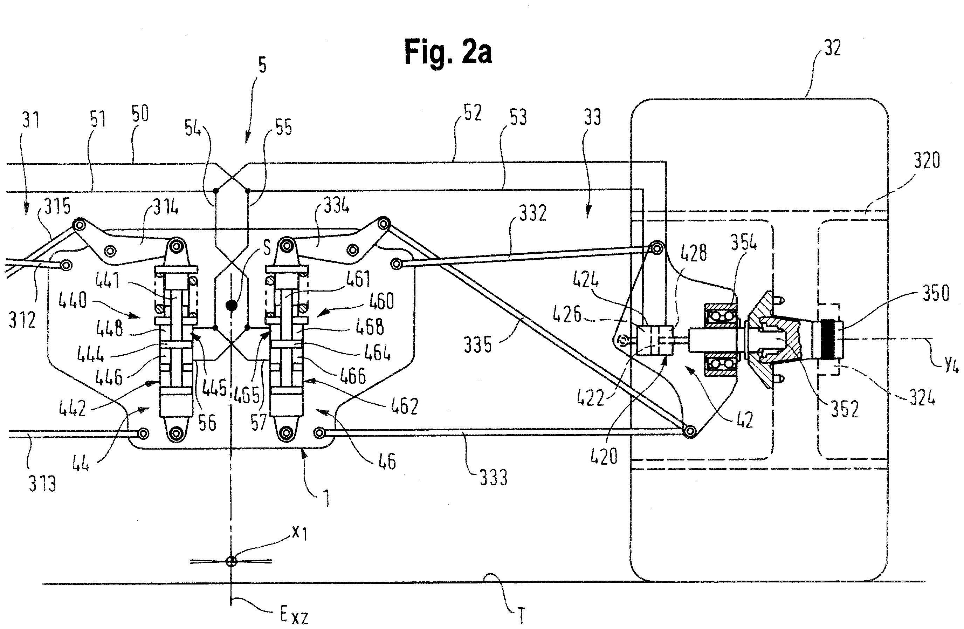

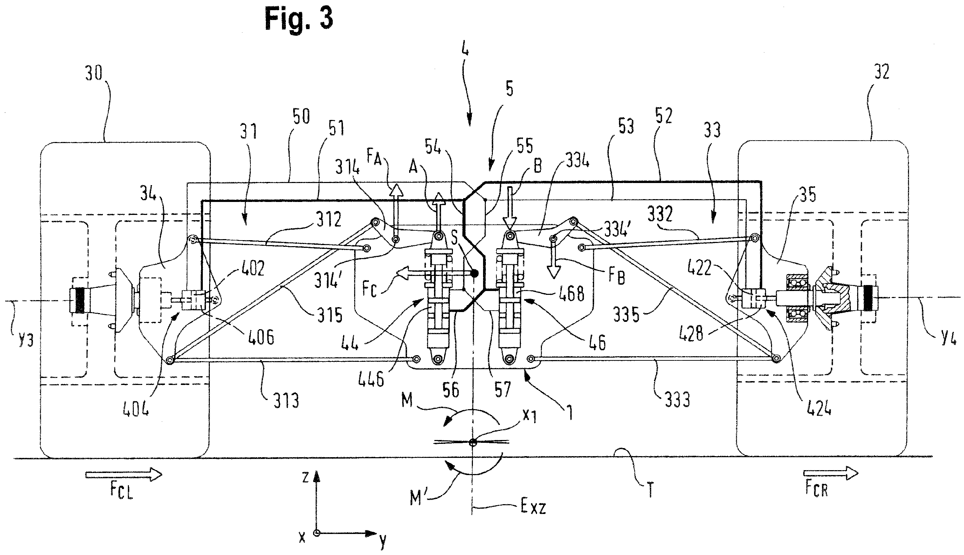

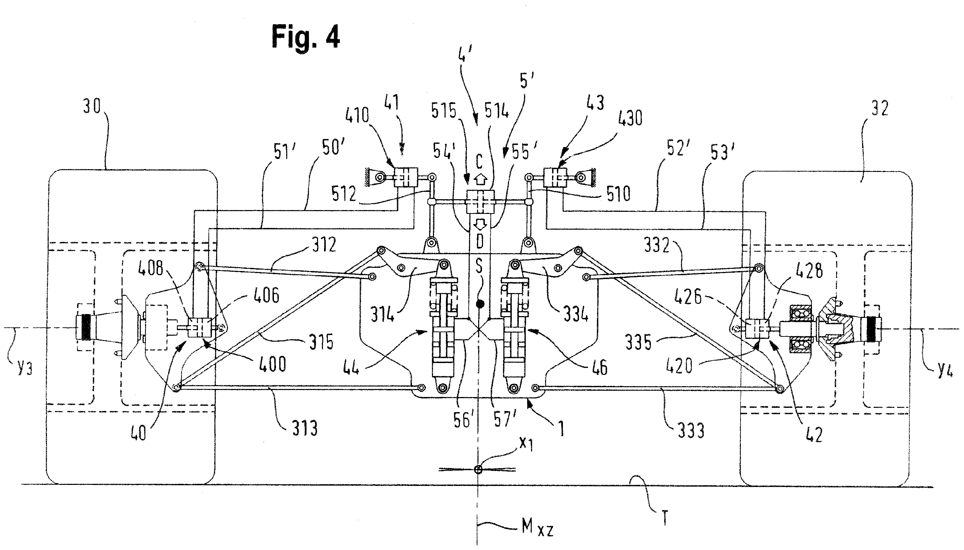

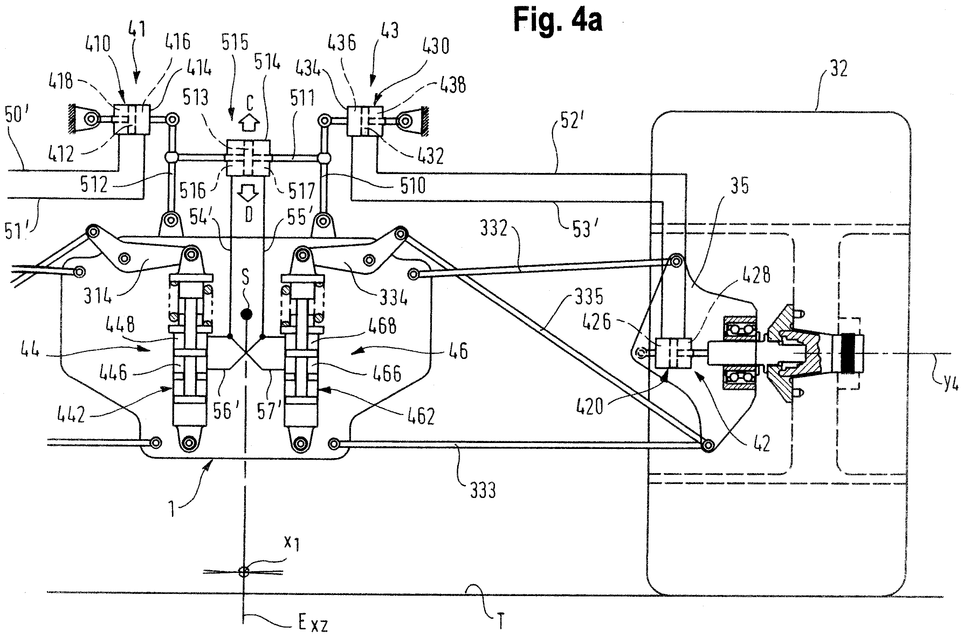

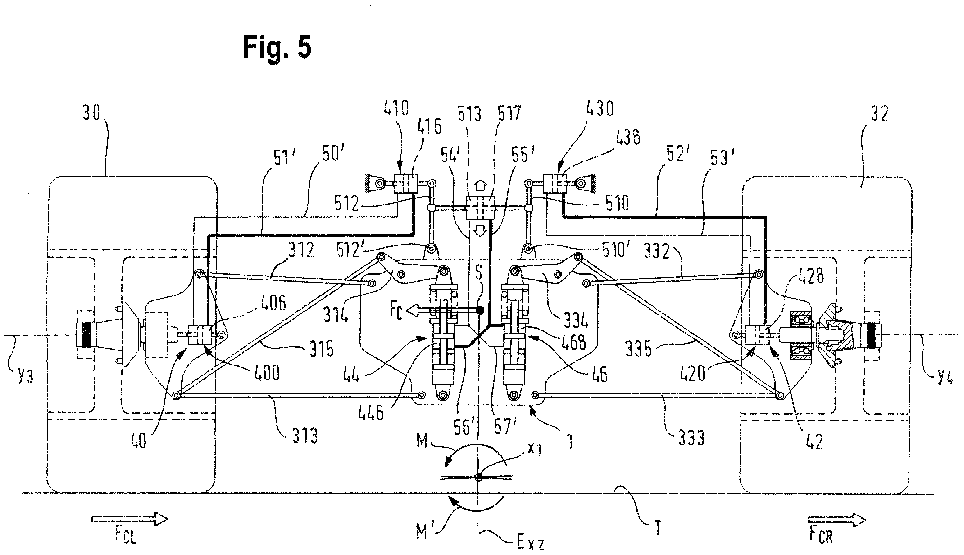

Der Aufbau und die Funktion der beim erfindungsgemäßen Fahrzeug vorgesehenen Antirolleinrichtung wird nachstehend unter Bezugnahme auf die Fig. 2 bis 5 näher beschrieben, wobei die Fig. 2 und 3 eine erste Ausführungsform und die Fig. 4 und 5 eine zweite Ausführungsform wiedergeben. Die Fig. 2 bis 5 zeigen jeweils eine Heckansicht des Fahrzeugs aus Fig. 1 mit dem linken Hinterrad 30 und dem rechten Hinterrad 32 sowie der linken Radaufhängung 31 und der rechten Radaufhängung 33 der hinteren Radpaarung 3. Die Erfindung ist jedoch nicht auf die hintere Radpaarung 3 beschränkt, sondern kann ebenso bei der vorderen Radpaarung 2 mittels einer dort vorgesehenen und analog ausgebildeten vorderen Antirolleinrichtung realisiert sein. Daher gelten die nachstehenden, auf die jeweilige hintere Radpaarung 3 gerichteten Ausführungen in analoger Weise auch für die jeweilige vordere Radpaarung 2.

Anhand der Fig. 2, die in schematischer Weise die Heckansicht eines erfindungsgemäß mit einer Antirolleinrichtung 4 ausgestatteten Rennfahrzeugs zeigt, und deren Ausschnittvergrößerung in Fig. 2A werden die einzelnen Komponenten der Radaufhängungen 31, 33 und der Komponenten der Antirolleichrichtung 4 beschrieben.

Wie in der teilweise geschnittenen Ansicht des rechten Hinterrades 32 zu erkennen ist, ist die Radfelge 320 in herkömmlicher Weise auf die Radnabe 350 des Radträgers 35 aufgesetzt und mit einer Radmutter 324 fixiert. Die Radnabe 350 ist mit einem Achsstummel 352 drehfest und axialfest verbunden, welcher in einem Radlager 354, das mit seinem Außenring am Radträger 35 befestigt ist, drehbar und in Richtung der Drehachse y₄ des Rades 32 verschiebbar gelagert ist. Der Achsstummel 352 beaufschlagt an seinem von der Radnabe 350 abgewandten, zum Chassis 1 weisenden Ende einen Kolben 422 einer als Drucksensor ausgebildeten Kolben-Zylinder-Einheit 420. Dadurch bildet die Kolben-Zylinder-Einheit 420 einen Wegaufnehmer 42 für die Axialverschiebung des Rades 32 relativ zum Radträger 35. Der Kolben 422 unterteilt den Zylinder 424 der Kolben-Zylinder-Einheit 420 in eine zur Fahrzeuginnenseite weisende erste Kammer 426 und eine zur Fahrzeugaußenseite weisende zweite Kammer 428.

Beiderseits der vertikalen Fahrzeuglängsmittelebene E_{xz} ist jeweils ein Stoßdämpfer 440, 460 mit seinem unteren Ende am Chassis 1 in herkömmlicher Weise schwenkbar angebracht. In den linken Stoßdämpfer 440 und den rechten Stoßdämpfer 460 ist jeweils ein hydraulischer oder pneumatische Aktuator 442, 462 integriert, der einen mit der Kolbenstange 441, 461 des jeweiligen Stoßdämpfers 440, 460 verbundenen Kolben 444, 464 aufweist, der in einem Zylinderabschnitt 445, 465 des Stoßdämpfers auf und ab bewegbar ist. Der jeweilige Kolben 444, 464 unterteilt den zugeordneten Zylinderabschnitt 445, 465 in eine untere Kammer 446, 466 und in eine obere Kammer 448, 468.

Die innere, erste Kammer 426 der Kolben-Zylinder-Einheit 420 des hinteren rechten Wegaufnehmers 42 ist über eine erste Druckleitung 53 mit einer zweiten Druckleitung 55 verbunden, die ihrerseits mit einer dritten Druckleitung 57 verbunden ist, welche die obere Kammer 448 des linken Aktuators 442 mit der unteren Kammer 466 des rechten Aktuators 462 verbindet. Die zur Fahrzeugaußenseite weisende zweite Kammer 428 der Kolben-Zylinder-Einheit 420 des rechten hinteren Wegaufnehmers 42 ist über eine vierte Druckleitung 52 mit einer fünften Druckleitung 54 verbunden, die ihrerseits mit einer sechsten Druckleitung 56 verbunden ist, welche die untere Kammer 446 des Aktuators 442 im linken Stoßdämpfer mit der oberen Kammer 468 des Aktuators 462 des rechten Stoßdämpfers 460 verbindet.

Auf die gleiche Weise wie es vorstehend für die rechte hintere Radaufhängung 33 beschrieben worden ist, aber spiegelbildlich zur vertikalen Fahrzeuglängsmittelebene E_{xz}, ist auch die linke Radaufhängung 31 mit einem eine Kolben-Zylinder-Einheit 400 aufweisenden Wegaufnehmer 40 ausgestattet. Eine zur Fahrzeuginnenseite weisende erste Kammer 406 der linksseitigen hinteren Kolben-Zylinder-Einheit 400 ist über eine hintere linksseitige erste Druckleitung 51 mit der hinteren rechten vierten Druckleitung 52 verbunden und die zur Fahrzeugaußenseite weisende zweite Kammer 408 der hinteren linken Kolben-Zylinder-Einheit 400 ist über ein weitere hintere linksseitige Druckleitung 50 mit der hinteren rechtsseitigen ersten Druckleitung 53 verbunden. Auf diese Weise sind sowohl die Kammern 406, 408 der linksseitigen hinteren Kolben-Zylinder-Einheit 400 und die Kammern 426, 428 der rechtsseitigen hinteren Kolben-Zylinder-Einheit 420 als auch die Kammern 446, 448 des linken hinteren Aktuators 442 und die Kammern 466, 468 des rechten hinteren Aktuators 462 überkreuz miteinander verbunden. Die Druckleitungen bilden hierbei Signalleitungen für Drucksignale, die zwischen den Wegaufnehmern und den Aktuatoren übertragen werden, wobei die beschriebene Überkreuz-Verschaltung der Druckleitungen eine Signalverarbeitungseinrichtung 5 bildet.

Die jeweiligen Stoßdämpfer 440, 460 sind mit ihren Kolbenstangen 441, 461 an einem inneren Hebelarm des am Chassis 1 gelenkig gelagerten Umlenkhebels 314 beziehungsweise 334 auf der Seite des jeweiligen Stoßdämpfers 440, 460 schwenkbar angelenkt.

Die Funktionsweise der in Fig. 2 gezeigten Antirolleinrichtung 4 wird nachstehend anhand der Darstellung in Fig. 3 beschrieben.

Fig. 3 zeigt dieselbe Ansicht wie Fig. 2, also einen Blick auf die Rückseite eines erfindungsgemäßen Fahrzeugs mit Blickrichtung in Fahrtrichtung des Fahrzeugs. Fährt das in Fig. 3 gezeigte Fahrzeug eine Rechtskurve, so greift am Schwerpunkt S des Chassis' 1 eine Fliehkraft Fc an, die bestrebt ist, das Chassis 1 aus der Kurve radial nach außen, also in der Darstellung der Fig. 3 nach links, zu bewegen. Dieser Fliehkraft Fc entgegen wirken die Seitenführungskräfte F_{CL} und F_{CR} zwischen dem jeweiligen Rad 30, 32 und der Fahrbahn T. Bei stabiler Kurvenfahrt, also wenn das Fahrzeug nicht zur Seite driftet, kompensieren die Seitenführungskräfte F_{CL} und F_{CR} die Zentrifugalkraft Fc. Aufgrund der unterschiedlichen Höhe der Angriffspunkte der Zentrifugalkraft Fc und der Seitenführungskräfte F_{CL} und F_{CR} wirkt auf das Chassis 1 ein Rollmoment M ein, welches bestrebt ist, das Chassis 1 um eine durch die Rollzentren der Achskinematik der vorderen und der hinteren Radpaarung 2, 3 verlaufende Rollachse x₁ des Fahrzeugs, im gezeigten Beispiel entgegen dem Uhrzeigersinn, zu verschwenken. Dies führt bei einem Fahrzeug ohne die erfindungsgemäß ausgestaltete Antirolleinrichtung 4 zu einer rollneigungsbedingten Schrägstellung des Chassis und der aerodynamischen Hilfsmittel relativ zur Fahrbahn T, so dass beispielsweise der vertikale Abstand zwischen einem Frontflügel und der Fahrbahn T auf der Kurveninnenseite größer ist als auf der Kurvenaußenseite, was erhebliche aerodynamische Nachteile mit sich bringt, mit der Folge einer verringerten maximal möglichen Kurvengeschwindigkeit. Durch die erfindungsgemäß am Fahrzeug vorgesehene Antirolleinrichtung 4 wird allerdings dieser Nachteil behoben, wie es nachstehend dargelegt wird.

Die seitliche Bodenhaftung der Räder 30, 32 und die axiale Verschiebbarkeit der Räder 30, 32 relativ zu den mit dem Chassis 1 verbundenen Radträgern 34, 35 bewirkt, dass sich die mit dem jeweiligen Radträger 34, 35 fest verbundenen Zylinder 404, 424 der Kolben-Zylinder-Einheit 400 des linken Wegaufnehmers 40 sowie der rechten Kolben-Zylinder-Einheit 420 des rechten Wegaufnehmers 42 in Richtung der Fliehkraft Fc, also in Fig. 3 nach links, verschieben. Da sich der jeweilige Kolben 402, 422 mit dem zugeordneten Rad 30, 32 in Querrichtung relativ zur Fahrbahn, also in Radialrichtung der Kurve, aufgrund der seitlichen Bodenhaftung nicht bewegt, wird in der jeweils rechten, kurveninneren Kammer 406, 428 der Kolben-Zylinder-Einheit 400 beziehungsweise 420 ein Überdruck erzeugt.

Dieser Überdruck wird durch die zugeordneten Druckleitungen 51, 52, 54, 56, die in Fig. 3 als Überdruck führende Druckleitungen dicker gezeichnet sind, zur unteren Kammer 446 des im linken Stoßdämpfer 440 vorgesehenen Aktuators 442 und zur oberen Kammer 468 des im rechten Stoßdämpfer 460 vorgesehenen Aktuators 462 geleitet. Durch den Druckanstieg in diesen beiden Kammern 446, 468 der Aktuatoren 442, 462 wird die Kolbenstange 441 des linken Stoßdämpfers 440 nach oben und die Kolbenstange 461 des rechten Stoßdämpfers 460 nach unten bewegt, was durch die Kraftpfeile A und B symbolisiert ist. Diese auf den jeweiligen Umlenkhebel 314, 334 einwirkenden Kräfte sind bestrebt, den jeweiligen Umlenkhebel 314, 334 jeweils entgegen dem Uhrzeigersinn zu verschwenken.

Da sich der jeweilige Umlenkhebel 314, 334 über die zugeordnete Schubstange 315, 335 am zugeordneten Radträger 34, 35 gegen Druck- und Zugkräfte abstützt, ist eine Verschwenkung des jeweiligen Umlenkhebels 314, 334 nicht möglich. Die von der jeweiligen Kolbenstange 441, 461 in den zugeordneten Umlenkhebel 314 beziehungsweise 334 eingeleitete Vertikalkraft wirkt somit über die Lagerung 314', 334' des Umlenkhebels 314, 334 am Chassis 1 unmittelbar auf das Chassis, so dass auf das Chassis 1 auf der linken Seite der Fahrzeuglängsmittelebene E_{xz} eine nach oben gerichtete Kraft F_{A} und auf der rechten Seite eine nach unten gerichtete Kraft F_{B} ausgeübt wird.

Die Kräfte F_{A} und F_{B} erzeugen ihrerseits ein Stabilisierungsmoment M', welches um die Rollachse x₁ des Fahrzeugs im Uhrzeigersinn, also dem Rollmoment M entgegen gerichtet, wirkt. Bei entsprechender Auslegung der Kolben-Zylinder-Einheiten 400, 420 und der Aktuatoren 442, 462 heben sich das Rollmoment M und das von der Antirolleinrichtung 4 erzeugte Stabilisierungsmoment M' gegeneinander auf, so dass auch bei Kurvenfahrt das Chassis 1 und damit die am Chassis angebrachten aerodynamischen Wirkelemente in ihrer Position parallel zur Fahrbahn T ausgerichtet sind, wodurch die gewünschte aerodynamische Wirkung auch bei Kurvenfahrt erhalten bleibt, so dass höhere Kurvengeschwindigkeiten mit dem Fahrzeug gefahren werden können.

Fig. 4 zeigt eine abgewandelte Ausführungsform der in den Fig. 2 und 3 dargestellten Antirolleinrichtung mit einer Ausschnittvergrößerung in Fig. 4A. Diese Antirolleinrichtung 4' weist zwei hydraulisch beziehungsweise pneumatisch voneinander entkoppelte hydraulische beziehungsweise pneumatische Funktionskreise auf, die mechanisch miteinander gekoppelt sind. Das Fahrwerk und die Fahrwerkskinematik des Fahrzeugs dieser Ausführungsform entspricht jener der bereits beschriebenen Ausführungsform, so dass hier dieselben Bezugszeichen verwendet werden, wie in den Fig. 2 und 3. Es werden daher nachstehend nur jene Teile beschrieben, die von der Ausführungsform der Fig. 2 und 3 abweichen.

Die Signalverarbeitungseinrichtung 5' dieser Ausführungsform ist nicht nur durch die überkreuz miteinander verbundenen Kammern der einzelnen Kolben-Zylinder-Einheiten gebildet, sondern weist zudem eine mechanische Kopplung der linksseitigen Hydraulik beziehungsweise Pneumatik mit der rechtsseitigen Hydraulik beziehungsweise Pneumatik auf, wobei die mechanische Kopplung verstellbar ausgebildet ist, so dass unterschiedliche Signalverstärkungen, also Druckverstärkungen, einstellbar sind.

Die zum Chassis 1 weisende erste Kammer 426 der Kolben-Zylinder-Einheit 420 des rechtsseitigen Wegaufnehmers 42 ist über eine erste, rechte Druckleitung 53' mit einer zur vertikalen Fahrzeuglängsmittelebene E_{xz} weisenden ersten Kammer 436 einer Kolben-Zylinder-Einheit 430 eines rechtsseitigen Zwischenaktuators 43 verbunden. Die zur Fahrzeugaußenseite weisende zweite Kammer 428 der Kolben-Zylinder-Einheit 420 des hinteren rechten Wegaufnehmers 42 ist über eine zweite, rechte Druckleitung 52' mit einer zur Fahrzeugaußenseite weisenden Kammer 438 der Kolben-Zylinder-Einheit 430 des rechtsseitigen Zwischenaktuators 43 verbunden. Der Kolben 432 des Zwischenaktuators 43 ist über eine Kolbenstange am Chassis 1 gelagert, wie es in Fig. 4 symbolisch dargestellt ist. Der Zylinder 434 des Zwischenaktuators 43 ist an einem ersten Ende eines rechten Kipphebels 510 gelenkig gelagert, welcher mit seinem zweiten Ende gelenkig am Chassis 1 gelagert ist.

Auf analoge, spiegelbildliche Weise ist die linksseitige Hydraulik beziehungsweise Pneumatik aufgebaut. Die zum Chassis 1 weisende erste Kammer 406 der Kolben-Zylinder-Einheit 400 des linksseitigen Wegaufnehmers 40 ist über eine erste, linke Druckleitung 51' mit einer zur vertikalen Fahrzeuglängsmittelebene E_{xz} weisenden ersten Kammer 416 einer Kolben-Zylinder-Einheit 410 eines linksseitigen Zwischenaktuators 41 verbunden. Die zur Fahrzeugaußenseite weisende zweite Kammer 408 der Kolben-Zylinder-Einheit 400 des hinteren linken Wegaufnehmers 40 ist über eine zweite, linke Druckleitung 50' mit einer zur Fahrzeugaußenseite weisenden zweiten Kammer 418 der Kolben-Zylinder-Einheit 410 des linksseitigen Zwischenaktuators 41 verbunden. Der Kolben 412 des Zwischenaktuators 41 ist über eine Kolbenstange am Chassis 1 gelagert, wie es in Fig. 4 symbolisch dargestellt ist. Der Zylinder 414 des Zwischenaktuators 41 ist an einem ersten Ende eines linken Kipphebels 512 gelenkig gelagert, welcher mit seinem zweiten Ende gelenkig am Chassis 1 gelagert ist.

Die beiden Kipphebel 510, 512 sind über ein entlang zumindest eines Bereichs der Längserstreckung der Kipphebel 510, 512 verschiebbar angeordnetes Verbindungsglied, im gezeigten Beispiel eine Verbindungsstange 511, miteinander gekoppelt. Diese Verbindungsstange 511 weist in der Mitte einen Kolben 513 auf, der in einem Zylinder 514 angeordnet ist. Der Zylinder 514 und der Kolben 513 bilden somit eine zentrale Kolben-Zylinder-Einheit 515. Der Zylinder 514 ist dabei relativ zum Chassis 1 derart schwenkbar gelagert, dass er in Längsrichtung der Verbindungsstange 511 fixiert, aber rechtwinklig dazu, also in Längsrichtung der Kipphebel 510, 512, verschiebbar ist, wie durch die Pfeile C und D in Fig. 4 symbolisch dargestellt ist.

Die zentrale Kolben-Zylinder-Einheit 515 weist somit eine linke Kammer 516 und eine rechte Kammer 517 auf. Die linke Kammer 516 ist über eine Druckleitung 54' mit einer weiteren Druckleitung 57' verbunden, die die obere Kammer 448 des linksseitigen Aktuators 442 mit der unteren Kammer 466 des rechtsseitigen Aktuators 462 verbindet. Die rechte Kammer 517 der zentralen Kolben-Zylinder-Einheit 515 ist über eine Druckleitung 55' mit einer weiteren Druckleitung 56' verbunden, welche ihrerseits die untere Kammer 446 des linksseitigen Aktuators 442 mit der oberen Kammer 468 des rechtsseitigen Aktuators 462 verbindet.

Die Funktionsweise dieser Ausführungsform wird nachstehend anhand der Darstellung in Fig. 5 beschrieben. Fig. 5 zeigt - analog zur Fig. 3 - die Funktionsweise der Ausführungsform gemäß der Fig. 4. Auch hier wird angenommen, dass - wie im Beispiel der Fig. 3 - das Fahrzeug eine Rechtskurve fährt, so dass die Fliehkraft Fc und die Seitenführungskräfte F_{CL} und F_{CR} wie im Beispiel der Fig. 3 aufgebaut werden. Diesbezüglich wird daher auf die Beschreibung der Fig. 3 verwiesen. Auch in Fig. 5 sind die Überdruck führenden Druckleitungen mit einer dickeren Strichstärke dargestellt.

Der in der zum Chassis 1 weisenden Druckkammer 406 der Kolben-Zylinder-Einheit 400 des kurvenäußeren, linksseitigen Wegaufnehmers 40 erzeugte Überdruck wird in die zur vertikalen Fahrzeuglängsmittelebene E_{xz} weisende Kammer 416 der Kolben-Zylinder-Einheit 410 des linksseitigen Zwischenaktuators 41 eingeleitet. Dadurch wird der Zylinder 414 des linksseitigen Zwischenaktuators 41 nach rechts, also zur vertikalen Fahrzeuglängsmittelebene E_{xz} hin, verschoben. Das wiederum bewirkt eine Verschwenkung des Kipphebels 512 im Uhrzeigersinn um dessen Anlenkpunkt 512' am Chassis 1 herum. Dadurch wiederum wird der Kolben 513 im Zylinder 514 der zentralen Kolben-Zylinder-Einheit 515 nach rechts verschoben, wodurch der Druck in der rechten Kammer 517 der zentralen Kolben-Zylinder-Einheit 515 ansteigt.

Auch der durch die Fliehkraft Fc und die Seitenführungskräfte F_{CL}, F_{CR} bewirkte Druckanstieg in der zur Fahrzeugaußenseite weisenden Kammer 428 der Kolben-Zylinder-Einheit 420 des kurveninneren, rechtsseitigen Wegaufnehmers 42 führt zu einem Überdruck, der durch die Druckleitung 52' in die zur Fahrzeugaußenseite weisende Kammer 438 des rechtsseitigen Zwischenaktuators 43 geleitet wird, woraufhin dessen Zylinder 434 nach rechts, also von der Fahrzeuglängsmittelebene E_{xz} weg, bewegt wird. Dadurch wird auch der rechte Kipphebel 510 um seinen Anlenkpunkt 510' am Chassis 1 im Uhrzeigersinn geschwenkt, wodurch der Druckanstieg in der rechten Kammer 517 der zentralen Kolben-Zylinder-Einheit 515 weiter erhöht wird.

Dieser Überdruck in der rechten Kammer 517 der zentralen Kolben-Zylinder-Einheit 515 wird in die untere Kammer 446 des linksseitigen Aktuators 442 und in die obere Kammer 468 des rechtsseitigen Aktuators 462 eingeleitet, woraufhin es wie im Beispiel der Fig. 3 zum Aufbau eines Stabilisierungsmoments M' kommt welches dem Rollmoment M entgegenwirkt.

Auch wenn in den beschriebenen Beispielen hydraulische oder pneumatische Wegaufnehmer und Aktuatoren gezeigt und beschrieben worden sind, die über als Druckleitungen ausgebildete Signalleitungen miteinander kommunizieren, so ist die Erfindung nicht auf eine hydraulische oder pneumatische Lösung beschränkt. Ebenso gut können die Wegaufnehmer und die Aktuatoren elektromechanisch oder elektrohydraulisch ausgebildet sein und anstelle der Druckleitungen können elektrische Leitungen als Signalleitungen vorgesehen sein.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Chassis
- 2: Radpaarung
- 3: Radpaarung
- 4: Antirolleinrichtung
- 4': Antirolleinrichtung
- 5: Signalverarbeitungseinrichtung
- 5': Signalverarbeitungseinrichtung
- 10: Cockpit
- 20: linkes Vorderrad
- 21: vordere linke Radaufhängung
- 22: rechtes Vorderrad
- 23: vordere rechte Radaufhängung
- 24: Radträger
- 25: Radträger
- 30: linkes Hinterrad
- 31: hintere linke Radaufhängung
- 32: rechtes Hinterrad
- 33: hintere rechte Radaufhängung
- 34: Radträger
- 35: Radträger
- 40: linker Wegaufnehmer
- 41: Zwischenaktuator
- 42: rechter Wegaufnehmer
- 43: Zwischenaktuator
- 44: Stellglied
- 46: Stellglied
- 50: Signalleitung
- 50': Signalleitung
- 51: Signalleitung
- 51': Signalleitung
- 52: Signalleitung
- 52': Signalleitung
- 53: Signalleitung
- 53': Signalleitung
- 54: Signalleitung
- 54': Signalleitung
- 55: Signalleitung
- 55': Signalleitung
- 56: Signalleitung
- 56': Signalleitung
- 57: Signalleitung
- 57': Signalleitung
- 210: Lenker
- 211: Lenker
- 212: Lenker
- 213: Lenker
- 214: Umlenkhebel
- 215: Schubstange
- 230: Lenker
- 231: Lenker
- 232: Lenker
- 233: Lenker
- 234: Umlenkhebel
- 235: Schubstange
- 310: Lenker
- 311: Lenker
- 312: Lenker
- 313: Lenker
- 314: Umlenkhebel
- 314': Lagerung des Umlenkhebels 314
- 315: Schubstange
- 320: Radfelge
- 330: Lenker
- 331: Lenker
- 332: Lenker
- 333: Lenker
- 334: Umlenkhebel
- 334': Lagerung des Umlenkhebels 334
- 335: Schubstange
- 350: Radnabe
- 352: Achsstummel
- 354: Radlager
- 400: Kolben-Zylinder-Einheit
- 402: Kolben
- 404: Zylinder
- 406: innere, erste Kammer
- 408: zweite Kammer
- 410: Kolben-Zylinder-Einheit
- 412: Kolben
- 414: Zylinder
- 416: innere, erste Kammer
- 418: zweite Kammer
- 420: linksseitige hintere Kolben-Zylinder-Einheit / Drucksensor
- 422: Kolben
- 424: Zylinder
- 426: innere, erste Kammer
- 428: zweite Kammer
- 430: Kolben-Zylinder-Einheit
- 432: Kolben
- 434: Zylinder
- 436: innere, erste Kammer
- 438: Kammer
- 440: linker Stoßdämpfer
- 441: Kolbenstange
- 442: Aktuator
- 444: Kolben
- 445: Zylinderabschnitt
- 446: untere Kammer
- 448: obere Kammer
- 460: rechter Stoßdämpfer
- 461: Kolbenstange
- 462: Aktuator
- 464: Kolben
- 465: Zylinderabschnitt
- 466: untere Kammer
- 468: obere Kammer
- 510: rechter Kipphebel
- 510': Anlenkpunkt
- 511: Verbindungsstange
- 512: linker Kipphebel
- 512': Anlenkpunkt
- 513: Kolben
- 514: Zylinder
- 515: Kolben-Zylinder-Einheit
- 516: linke Kammer
- 517: rechte Kammer

- E_{XZ}: Fahrzeuglängsmittelebene
- F_{A}: nach oben gerichtete Kraft
- F_{B}: nach unten gerichtete Kraft
- F_{C}: Fliehkraft
- F_{CL}: Seitenführungskraft
- F_{CR}: Seitenführungskraft
- M: Rollmoment
- M': Stabilisierungsmoment
- S: Schwerpunkt der gefederten Massen
- T: Fahrbahn
- x₁: Rollachse
- y₁: Drehachse
- y₂: Drehachse
- y₃: Drehachse
- y₄: Drehachse

## Patentansprüche

1. Fahrzeug mit einem Chassis (1), an dem zwei eine vordere Radpaarung (2) bildende Vorderräder (20, 22) und zwei eine hintere Radpaarung (3) bildende Hinterräder (30, 32) mittels einer jeweiligen Radaufhängung (21, 23, 31, 33) angeordnet sind, wobei jedem Rad (20, 22, 30, 32) ein Radträger (24, 25, 34, 35) zugeordnet ist, an dem das zugeordnete Rad (20, 22, 30, 32) um eine jeweilige Drehachse (y₁, y₂, y₃, y₄) drehbar gelagert ist und der über Lenker (210, 211, 212, 213, 230, 231, 232, 233, 310, 311, 312, 313, 330, 331, 332, 333) mit dem Chassis (1) verbunden ist, und wobei eine Antirolleinrichtung (4) vorgesehen ist, die bei Kurvenfahrt einer Neigung des Chassis' (1) um die Rollachse (x₁) des Fahrzeugs entgegenwirkt,
**dadurch gekennzeichnet,**
- **dass** die Räder (20, 22, 30, 32) zumindest einer der Radpaarungen (2, 3) relativ zum zugeordneten Radträger (24, 25, 34, 35) in Axialrichtung der zugeordneten Drehachse (y₁, y₂, y₃, y₄) verschiebbar gelagert sind;
- **dass** die Antirolleinrichtung (4, 4') Wegaufnehmer (40, 42) aufweist, wobei jedem der Räder (20, 22, 30, 32) der zumindest einen Radpaarung (2, 3) zumindest einer der Wegaufnehmer (40, 42) derart zugeordnet ist, dass eine axiale Verschiebung eines Rades (20, 22, 30, 32) in dem zumindest einen zugeordneten Wegaufnehmer (40, 42) ein Signal erzeugt;
- **dass** die Antirolleinrichtung (4, 4') weiterhin Stellglieder (44, 46) aufweist, wobei jedem der Räder (20, 22, 30, 32) der zumindest einen Radpaarung (2, 3) zumindest ein Stellglied (44, 46) zugeordnet ist, das einerseits mit dem Chassis (1) mechanisch verbunden ist und das andererseits über Lenker (214, 215, 234, 235, 314, 315, 334, 335) mit dem zugeordneten Radträger (24, 25, 34, 35) mechanisch verbunden ist, und
- **dass** die Antirolleinrichtung (4, 4') eine Signalverarbeitungseinrichtung (5, 5') mit Signalleitungen (50, 51, 52, 53, 54, 55, 56, 57; 50', 51', 52', 53', 54', 55', 56', 57') aufweist, die die Wegaufnehmer (40, 42) mit den Stellgliedern (44, 46) zur Übertragung der Signale derart verbinden, dass eine axiale Verschiebung zumindest eines Rades (20, 22, 30, 32) zumindest ein Stellglied (44, 46) derart beeinflusst, dass das zumindest eine Stellglied (44, 46) das Chassis (1) mit einem Stabilisierungsmoment (M') um die Rollachse (x₁) beaufschlagt, das dem durch die Kurvenfahrt bedingten und die Neigung des Chassis' (1) verursachenden Rollmoment (M) entgegenwirkt.

2. Fahrzeug nach Anspruch 1,
**dadurch gekennzeichnet,**
**dass** die Wegaufnehmer (40, 42) als Drucksensoren ausgebildet sind.

3. Fahrzeug nach Anspruch 2,
**dadurch gekennzeichnet,**
**dass** der jeweilige Drucksensor zumindest eine hydraulische oder pneumatische Kolben-Zylinder-Einheit aufweist.

4. Fahrzeug nach Anspruch 1, 2 oder 3,
**dadurch gekennzeichnet,**
**dass** das jeweilige Stellglied (44, 46) in einen Stoßdämpfer integriert ist.

5. Fahrzeug nach Anspruch 3 oder 4,
**dadurch gekennzeichnet,**
**dass** das jeweilige Stellglied (44, 46) von zumindest einer hydraulischen oder pneumatischen Kolben-Zylinder-Einheit gebildet ist.

6. Fahrzeug nach einem der vorhergehenden Ansprüche,
**dadurch gekennzeichnet,**
**dass** die Wegaufnehmer (40, 42) einer Radpaarung (2, 3) über zugeordnete Signalleitungen (50, 51, 52, 53, 54, 55, 56, 57; 50', 51', 52', 53', 54', 55', 56', 57') mit allen Stellgliedern (44, 46) dieser Radpaarung (2, 3) zur Signalübertragung wirksam verbunden sind.

7. Fahrzeug nach einem der Ansprüche 1 bis 5,
**dadurch gekennzeichnet,**
**dass** der zumindest eine Wegaufnehmer (40, 42) eines Rades einer Radpaarung (2, 3) über zugeordnete Signalleitungen (50, 51, 52, 53, 54, 55, 56, 57; 50', 51', 52', 53', 54', 55', 56', 57') mit einem Zwischenaktuator (41, 43) zur Signalübertragung wirksam verbunden ist und das die Zwischenaktuatoren (41, 43) einer Radpaarung (2, 3) mit den Stellgliedern (44, 46) dieser Radpaarung (2, 3) zur Signalübertragung wirksam verbunden sind.

8. Fahrzeug nach Anspruch 7,
**dadurch gekennzeichnet,**
**dass** die Zwischenaktuatoren (41, 43) über eine vorzugsweise verstellbare, Hebelmechanik (510, 511, 512) miteinander gekoppelt sind.

9. Fahrzeug nach Anspruch 8,
**dadurch gekennzeichnet,**
**dass** die Hebelmechanik (510, 511, 512) eine Kolben-Zylinder-Einheit (515) aufweist, deren Kammern (516, 517) mit Kammern von Kolben-Zylinder-Einheiten der Stellglieder (44, 46) zur Druckübertragung wirksam verbunden sind.

10. Fahrzeug nach einem der vorhergehenden Ansprüche,
**dadurch gekennzeichnet,**
**dass** die Wegaufnehmer einer ersten Radpaarung (2, 3) über zugeordnete Signalleitungen mit Stellgliedern einer zweiten Radpaarung (3, 2) zur Signalübertragung wirksam verbunden sind, um Bewegungen des Fahrzeugs um die Nickachse entgegenzuwirken und/oder um Roll-Nick-Bewegungen des Fahrzeugs entgegenzuwirken.

## Claims

1. Vehicle having a chassis (1) on which two front wheels (20, 22) forming a front wheel pairing (2) and two rear wheels (30, 32) forming a rear wheel pairing (3) are arranged by means of a respective wheel suspension (21, 23, 31, 33), a wheel carrier (24, 25, 34, 35) being assigned to each wheel (20, 22, 30, 32), on which wheel carrier the associated wheel (20, 22, 30, 32) is mounted so as to be rotatable about a respective axis of rotation (y₁, y₂, y₃*,* y₄) and which wheel carrier is connected to the chassis (1) via links (210, 211, 212, 213, 230, 231, 232, 233, 310, 311, 312, 313, 330, 331, 332, 333), and wherein an anti-roll device (4) is provided which counteracts an inclination of the chassis (1) about the roll axis (x₁) of the vehicle during cornering,
**characterized**
- **in that** the wheels (20, 22, 30, 32) of at least one of the wheel pairings (2, 3) are mounted displaceably relative to the associated wheel carrier (24, 25, 34, 35) in the axial direction of the associated axis of rotation (y₁, y₂, y₃*,* y₄);
- **in that** the anti-roll device (4, 4') has displacement sensors (40, 42), wherein at least one of the displacement sensors (40, 42) is assigned to each one of the wheels (20, 22, 30, 32) of the at least one wheel pairing (2, 3) in such a way that an axial displacement of a wheel (20, 22, 30, 32) generates a signal in the at least one assigned displacement sensor (40, 42);
- **in that** the anti-roll device (4, 4') furthermore has actuators (44, 46), wherein at least one actuator (44, 46) is assigned to each of the wheels (20, 22, 30, 32) of the at least one wheel pairing (2, 3), said actuator (44, 46) being mechanically connected on the one hand to the chassis (1) and being mechanically connected on the other hand via links (214, 215, 234, 235, 314, 315, 334, 335) to the associated wheel support (24, 25, 34, 35), and
- **in that** the anti-roll device (4, 4') comprises a signal processing device (5, 5') with signal lines (50, 51, 52, 53, 54, 55, 56, 57; 50', 51', 52', 53', 54', 55', 56', 57') which connect the displacement sensors (40, 42) to the actuators (44, 46) for transmitting the signals in such a way that an axial displacement of at least one wheel (20, 22, 30, 32) influences at least one actuator (44, 46) in such a way that the at least one actuator (44, 46) acts on the chassis (1) with a stabilizing moment (M') about the roll axis (x₁) which counteracts the rolling moment (M) caused by the cornering and causing the inclination of the chassis (1).

2. Vehicle according to claim 1,
**characterized**
**in that** the displacement sensors (40, 42) are designed as pressure sensors.

3. Vehicle according to claim 2.
**characterized**
**in that** the respective pressure sensor has at least one hydraulic or pneumatic piston-cylinder unit.

4. Vehicle according to claim 1, 2 or 3,
**characterized**
**in that** the respective actuator (44, 46) is integrated in a shock absorber.

5. Vehicle according to claim 3 or 4,
**characterized**
**in that** the respective actuator (44, 46) is formed by at least one hydraulic or pneumatic piston-cylinder unit.

6. Vehicle according to one of the preceding claims,
**characterized**
**in that** the displacement sensors (40, 42) of a wheel pairing (2, 3) are operatively connected for signal transmission via associated signal lines (50, 51, 52, 53, 54, 55, 56, 57; 50', 51', 52', 53', 54', 55', 56', 57') to all actuators (44, 46) of this wheel pairing (2, 3).

7. Vehicle according to any of claims 1 to 5,
**characterized**
**in that** the at least one displacement sensor (40, 42) of a wheel of a wheel pairing (2, 3) is operatively connected for signal transmission via associated signal lines (50, 51, 52, 53, 54, 55, 56, 57; 50', 51', 52', 53', 54', 55', 56', 57') to an intermediate actuator (41, 43) and that the intermediate actuators (41, 43) of a wheel pairing (2, 3) are operatively connected for signal transmission to the actuators (44, 46) of this wheel pairing (2, 3).

8. Vehicle according to claim 7,
**characterized**
**in that** the intermediate actuators (41, 43) are coupled to one another via a preferably adjustable lever mechanism (510, 511, 512).

9. Vehicle according to claim 8,
**characterized**
**in that** the lever mechanism (510, 511, 512) has a piston-cylinder unit (515) whose chambers (516, 517) are operatively connected for pressure transmission to chambers of piston-cylinder units of the actuators (44, 46).

10. Vehicle according to one of the preceding claims,
**characterized**
**in that** the displacement sensors of a first wheel pairing (2, 3) are operatively connected for signal transmission via associated signal lines to actuators of a second wheel pairing (3, 2) in order to counteract movements of the vehicle about the pitch axis and/or in order to counteract roll-nick movements of the vehicle.

## Revendications

1. Véhicule comportant un châssis (1) sur lequel deux roues avant (20, 22) formant une paire de roues avant (2) et deux roues arrière (30, 32) formant une paire de roues arrière (3) sont disposées au moyen d'une suspension de roue respective (21, 23, 31, 33),
dans lequel
à chaque roue (20, 22, 30, 32) est associé un support de roue (24, 25, 34, 35) sur lequel la roue associée (20, 22, 30, 32) est montée de manière à pouvoir tourner autour d'un axe de rotation respectif (y₁, y₂, y₃*,* y₄) et qui est relié au châssis (1) par l'intermédiaire de bras oscillants (210, 211, 212, 214, 230, 231, 232, 233, 310, 311, 312, 313, 330, 331, 332, 333), et
il est prévu un dispositif antiroulis (4) qui s'oppose à une inclinaison du châssis (1) autour de l'axe de roulis (x₁) du véhicule lors d'un déplacement en virage,
**caractérisé en ce que**
- les roues (20, 22, 30, 32) de l'une au moins des paires de roues (2, 3) sont montées mobiles en translation par rapport au support de roue associé (24, 25, 34, 35) dans la direction axiale de l'axe de rotation associé (y₁, y₂, y₃*,* y₄) ;
- le dispositif antiroulis (4, 4') comprend des capteurs de déplacement (40, 42), l'un au moins des capteurs de déplacement (40, 42) étant associé à chacune des roues (20, 22, 30, 32) de ladite au moins une paire de roues (2, 3) de telle sorte qu'une translation axiale d'une roue (20, 22, 30, 32) génère un signal dans ledit au moins un capteur de déplacement associé (40, 42) ;
- le dispositif antiroulis (4, 4') comporte en outre des organes de positionnement (44, 46), à chacune des roues (20, 22, 30, 32) de ladite au moins une paire de roues (2, 3) étant associé au moins un organe de positionnement (44, 46) qui, d'une part, est relié mécaniquement au châssis (1) et qui, d'autre part, est relié mécaniquement au support de roue associé (24, 25, 34, 35) par l'intermédiaire de bras oscillants (214, 215, 234, 235, 314, 315, 334, 335), et
le dispositif antiroulis (4) comprend un dispositif de traitement de signaux (5, 5') comportant des lignes de signaux (50, 51, 52, 53, 54, 55, 56, 57 ; 50', 51', 52', 53', 54', 55', 56', 57') qui relient les capteurs de déplacement (40, 42) aux organes de positionnement (44, 46) pour la transmission des signaux, de telle sorte qu'une translation axiale d'au moins une roue (20, 22, 30, 32) influence au moins un organe de positionnement (44, 46) de telle sorte que ledit au moins un organe de positionnement (44, 46) sollicite le châssis (1) par un couple de stabilisation (M') autour de l'axe de roulis (x₁), qui s'oppose au couple de roulis (M) dû au déplacement en virage et provoquant l'inclinaison du châssis (1).

2. Véhicule selon la revendication 1,
**caractérisé en ce que**
les capteurs de déplacement (40, 42) sont réalisés sous forme de capteurs de pression.

3. Véhicule selon la revendication 2,
**caractérisé en ce que**
le capteur de pression respectif comprend au moins une unité à piston-et-cylindre hydraulique ou pneumatique.

4. Véhicule selon la revendication 1, 2 ou 3,
**caractérisé en ce que**
l'organe de positionnement respectif (44, 46) est intégré dans un amortisseur.

5. Véhicule selon la revendication 3 ou 4,
**caractérisé en ce que**
l'organe de positionnement respectif (44, 46) est formé par au moins une unité à piston-et-cylindre hydraulique ou pneumatique.

6. Véhicule selon l'une des revendications précédentes,
**caractérisé en ce que**
les capteurs de déplacement (40, 42) d'une paire de roues (2, 3) sont reliés en action de transmission de signaux à tous les organes de positionnement (44, 46) de ladite paire de roue (2, 3) par l'intermédiaire de lignes de signaux associées (50, 51, 52, 53, 54, 55, 56, 57 ; 50', 51', 52', 53', 54', 55', 56', 57').

7. Véhicule selon l'une des revendications 1 à 5,
**caractérisé en ce que**
ledit au moins un capteur de déplacement (40, 42) d'une roue d'une paire de roues (2, 3) est relié en action de transmission de signaux à un actionneur intermédiaire (41, 43) par l'intermédiaire de lignes de signaux associées (50, 51, 52, 53, 54, 55, 56, 57 ; 50', 51', 52', 53', 54', 55', 56', 57'), et
les actionneurs intermédiaires (41, 43) d'une paire de roues (2, 3) sont reliés en action de transmission de signaux aux organes de positionnement (44, 46) de ladite paire de roue (2, 3).

8. Véhicule selon la revendication 7,
**caractérisé en ce que**
les actionneurs intermédiaires (41, 43) sont couplés l'un à l'autre par un mécanisme à levier (510, 511, 512) de préférence réglable.

9. Véhicule selon la revendication 8,
**caractérisé en ce que**
le mécanisme à levier (510, 511, 512) comprend une unité à piston-et-cylindre (515) dont les chambres (516, 517) sont reliées en action de transmission de pression à des chambres d'unités à piston-et-cylindre des organes de positionnement (44, 46).

10. Véhicule selon l'une des revendications précédentes,
**caractérisé en ce que**
les capteurs de déplacement d'une première paire de roues (2, 3) sont reliés en action de transmission de signaux à des organes de positionnement d'une seconde paire de roues (3, 2) par l'intermédiaires de lignes de signaux associées, afin de s'opposer à des mouvements du véhicule autour de l'axe de tangage et/ou afin de s'opposer à des mouvements de roulis/tangage du véhicule.
